# EUROPEAN PATENT APPLICATION

(11) **EP 2 369 145 A1**
(43) Date of publication of application: **28.09.2011**
(21) Application number: 10002430.6
(22) Date of filing: 09.03.2010
(51) Int. Cl.: F01K 23/10, F01K 23/18, F01K 3/06, F01K 17/02, F24D 10/00, F02C 7/14, F02C 7/12

(54) **Power generation system and method**

(71) Applicant: Siemens Aktiengesellschaft, 80333 München (DE)
(72) Inventor: Littemyr, Peter, 61630 Aby (SE); Tifnicevic, Darko, 60209 Norrköping (SE); Tjellander, Göran, 61230 Finspang (SE)

(57) **Abstract**

A power generation system (2) having a first heat exchanger (18), a second heat exchanger (20), a third heat exchanger (22) and a fourth heat exchanger (24) for transferring or receiving heat to an ambient air (8) entering a gas turbine system (4) according to climate conditions. The first heat exchanger (18) is included to transfer heat from a working fluid (26) to said ambient air (8) entering said gas turbine inlet (6). The second heat exchanger (20) is included for transferring heat to the working fluid (26) from a fluid (28) received downstream of said heat recovery steam generator unit (10), said second heat exchanger (20) being connected to the first heat exchanger (18) by a first flow path (30) of the working fluid (26). The third exchanger (22) is included for transferring heat to the working fluid (26) from said process cooling fluid (14), said third heat exchanger (22) being connected to said second heat exchanger (20) by a second flow path (32) of the working fluid (26) and further connected to the first heat exchanger (18) by a third flow path (34) of the working fluid (26), wherein said first (30), second (32) and third (34) flow paths define a first circulation path (38) of the working fluid (26). The fourth heat exchanger (24) is included to connect to said first heat exchanger (18) through a fourth flow path (36) and to connect to said third flow path (34) to define a second circulation path (56) in parallel to said first circulation path (38), and to cool said working fluid (26) by transferring heat from said working fluid (26) to a exchanger cooling fluid (46) received from one of an absorption chiller (48) that is fed with a steam output (50) from the steam turbine (44), or a forwarding district cooling line (52) that is supplied with a cool fluid (54) cooled by said absorption chiller (48).

## Description

The invention relates to a power generation system, more particularly it relates to a power generation system including a gas turbine system.

A gas turbine system extracts energy from a flow of combustion gas. The gas turbine system has an upstream compressor coupled to a downstream turbine, and a combustion chamber in-between. When an ambient air is mixed with the fuel and ignited in the combustion chamber, the velocity, temperature and volume of the gas flow increases. This gas is directed through a nozzle over the turbine's blade s, spinning the turbine and powering the compressor. Power is extracted in the form of shaft power, compressed air and thrust, in any combination.

Temperature of the ambient air affects the performance of the gas turbines. On warmer days, when the ambient temperature of the air increases, the air becomes less dense and hence the air mass flow decreases and the exhaust temperature increases. The gas turbine system output decreases due to this decreased mass flow of ambient air. While, when the temperature of the ambient air gets low, the mass flow of the ambient air increases, which increases the power generation and the fuel consumption. Thus, to operate properly, the size of the gas turbine system needs to be increased and as well as the capacity of the fuel supply system needs to be increased.

Generally, on warm days, an ambient air entering the gas turbine system is cooled by chilling the ambient air and on cold days, the ambient air entering the gas turbine system is heated to avoid ice formation, and to keep the ambient air at an optimum temperature for keeping the power generation system efficient in respect to power generation, fuel consumption and size of the gas turbine system.

One such system and method is known from the US Patent Application No. 11/405,482 which discloses a system and method for selectively heating, or selectively heating or cooling compressor inlet air. The patent discloses a combined cycle power generating system having a gas turbine comprising a compressor and a steam turbine; a heat exchanger for controlling a temperature of inlet air to said compressor for selectively heating or cooling the said inlet air.

It is an object of the invention to increase the efficiency of a power generation system including a gas turbine system.

The above object is achieved by a power generation system including a gas turbine system having an inlet for ambient air, a heat recovery steam generation unit for recovering heat from an exhaust of said gas turbine system to generate steam, means for circulating a process cooling fluid for cooling a process element of said power generation system , a first heat exchanger adapted to transfer heat from a working fluid to said ambient air entering said gas turbine inlet, a second heat exchanger adapted for transferring heat to the working fluid from a fluid received downstream of said heat recovery steam generator unit, said second heat exchanger being connected to the first heat exchanger by a first flow path of the working fluid, and a third exchanger adapted for transferring heat to the working fluid from said process cooling fluid, said third heat exchanger being connected to said second heat exchanger by a second flow path of the working fluid and further connected to the first heat exchanger by a third flow path of the working fluid, wherein said first, second and third flow paths define a first circulation path of the working fluid. Such a power generation system provides the heat to the working fluid from the two sources, i.e., the second heat exchanger and third heat exchanger to provide more heat to heat the air more as per the ambient operating conditions.

According to one embodiment, the fluid received downstream of said heat recovery steam generator unit, is adapted to be received from an outlet of the heat recovery steam generation unit, or an exhaust of a steam turbine that is fed by said outlet of said heat recovery steam generation unit, or a forwarding hot water line fed by the steam turbine. Such a power generation system uses the heat from the power generation system to heat the air entering the gas turbine, thus no external source to heat the air is required.

According to one embodiment, the process cooling fluid is lubrication oil and the third heat exchanger is a lubrication oil cooler. This helps to provide heat regularly and uniformly to the third heat exchanger and also helps to cool the lubrication oil to work as a coolant.

According to an exemplary embodiment, the power generation system further includes a fourth heat exchanger adapted to cool said working fluid by transferring heat from said working fluid to a exchanger cooling fluid received from one of an absorption chiller that is fed with a steam output from an exhaust of the steam turbine, or a forwarding district cooling line that is supplied with a cool fluid cooled by said absorption chiller, wherein said fourth heat exchanger adapted to connect to said first heat exchanger through a fourth flow path and to connect to said third flow path to define a second circulation path in parallel to said first circulation path. This provides a power generation system which can cool as well as heat the ambient air from the heat and cool provided by the system.

According to a further embodiment, the power generation system further comprises a first control valve to control flow of the working fluid heated by said second heat exchanger and said third heat exchanger and a second control valve to control flow of the working fluid cooled by the fourth heat exchanger. This helps to control the flow of the working fluid to only allow desired amount of working fluid through the serial flow relationship of second and third heat exchangers, and fourth heat exchangers to receive a desired amount of cooled or heated working fluid by the first heat exchanger.

According to one embodiment, the first heat exchanger transfers heat to the ambient air from a fluid mixture comprising the working fluid heated by said second and third heat exchangers and the working fluid cooled by the fourth heat exchangers, wherein the first and second control valves are operable to control a temperature of said fluid mixture. This provides an optimum temperature to the ambient air, so that, the ambient air could be cooled or heated to reach an optimum temperature according to the ambient condition of the environment of the ambient air.

According to one embodiment, the working fluid is adapted to flow through at least one of said first circulation path or said second circulation path in a closed loop. The closed loop flow of the working fluid makes the working fluid reusable and maintains a continuous flow of working fluid through the power generation system.

According to further embodiment, the power generation system further comprises a fluid cooler adapted to regulate temperature of the working fluid passed out from the first heat exchanger and to be flown to the second heat exchanger. The introduction of fluid cooler into the loop helps to cool the working fluid returning to the serial flow relationship of second heat exchanger and the third heat exchanger, or the fourth heat exchanger to receive the working fluid cooled upto a desired temperature optimally as required by the second, third and fourth heat exchangers for running the power generation system.

According to an exemplary embodiment, the power generation system further comprises a third control valve adapted to control flow of said working fluid from said first heat exchanger to said second heat exchanger, and to said fourth heat exchanger, wherein the fluid cooler is in parallel flow relationship to said third valve in respect to said working fluid. This helps to regulate the flow of the working fluid returning from the first heat exchanger through the fluid cooler, so as to cool the working fluid up to a desired temperature optimally without varying the working conditions of the fluid cooler.

According to one embodiment, the first valve is a three-way valve adapted to further control flow of the working fluid passing out of the first heat exchanger and re-circulated into the first heat exchanger. This helps to maintain a regular flow of the working fluid into the first heat exchanger, so as to continuously regulate the temperature of the ambient air entering the gas turbine.

FIG is a schematic diagram of a power generation system according to an embodiment of the invention.

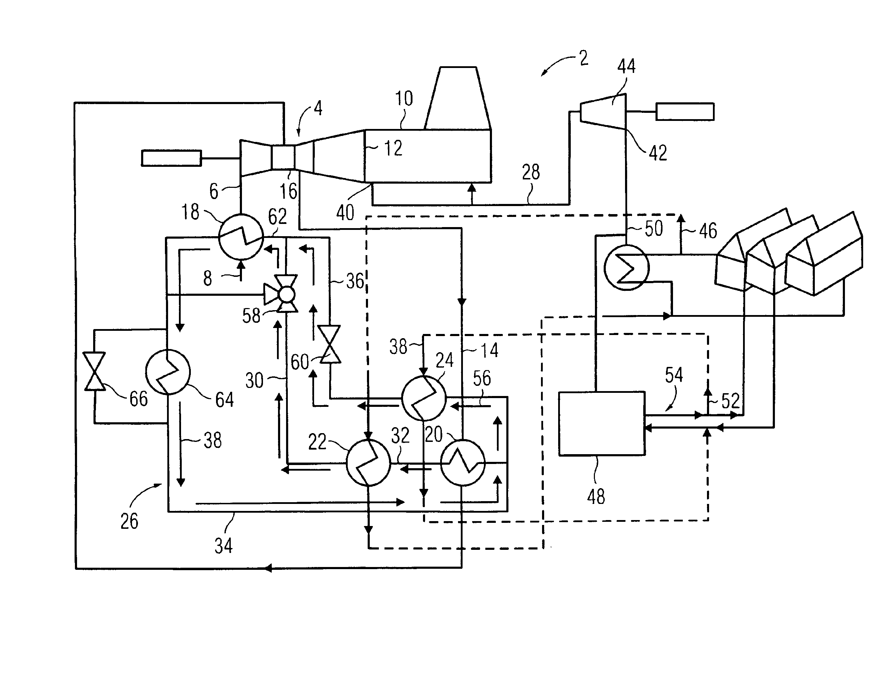

Various embodiments are described with reference to the drawing, wherein like reference numerals are used to refer to single elements throughout. In the following description, for purpose of explanation, numerous specific details are set forth in order to provide a thorough understanding of one or more embodiments. It may be evident that such embodiments may be practiced without these specific details.

A combined cycle power generation system or trigeneration system generates electric power, heat and cold. An ambient air enters a gas turbine system through an inlet into a compressor section to reach a required pressure ratio and than the ambient air with the pressure is fed with fuel into a combustion chamber section to produce a high temperature-pressure gas which enters the gas turbine section where the high temperature-pressure gas is expanded at the atmospheric pressure and hence producing electric power by generator. This hot gas is removed out of an exhaust of the gas turbine. A heat recovery steam generator receives the hot gas from the exhaust of the gas turbine and produces high pressure steam. This high pressure steam flows into the steam turbine, expanding and than flow to a condenser, condensing at low pressure to produce hot water. The hot water from the condenser of the steam turbine drives the absorption chiller or fed into a district forwarding hot water line or both. The absorption chiller produces cool water or cool fluid to be utilized by the power generation system. The cool water produced by the absorption chiller is fed into a forwarding cold water district line or any other cooling utility of the power generation system.

FIG. illustrates a schematic diagram of a combined cycle power generation system 2 according to an embodiment showing a gas turbine system 4, a heat recovery steam generation unit 10, a steam turbine 44, a forwarding hot water line 46, a forwarding cool water line 52, a absorption chiller 48, a first heat exchanger 18, a second heat exchanger 20, a third heat exchanger 22 and a fourth heat exchanger 24 functionally coupled together to generate power.

The first heat exchanger 18 heats up or cools an ambient air 8 entering an inlet 6 of a gas turbine system 4 using a working fluid 10. The gas turbine system 4 generates steam which is received by said heat recovery steam generation unit 10 at an exhaust 12 of said gas turbine system 4. When the ambient air 8 is cold, the ambient air 8 is heated up by a working fluid 26 circulating through the first heat exchanger 18, to maintain the efficiency of the power generation system 2. The first heat exchanger 18 thus acts as an anti-icing system in this case. When the ambient air 8 is warm, heat is transferred from the ambient air 8 to the working fluid 10 of the first exchanger 18, thereby cooling the ambient air 8. Before entering the first heat exchanger 18, the working fluid 26 is heated by a third heat exchanger 22 which transfers heat to said working fluid 26 from a process cooling fluid 14 circulated through said third heat exchanger 22, wherein said process cooling fluid 14 cools a process element 16 of said power generation system 2 by receiving heat from said process element 16. The third heat exchanger 22 connects to said first heat exchanger 18 through third flow path 34 of said working fluid 26. In the illustrated embodiment, the third heat exchanger 22 is a lubrication oil cooler, the process cooling fluid 14 is lubrication oil and the process element 16 is a gas turbine ball bearing. The lubrication oil cooler helps to keep the ball bearing of the gas turbine system 4 cool, so that the energy conversion efficiency can be maintained. When the process cooling fluid 14 enters ball bearing chamber, the process cooling fluid 14 gets heated up due to the transfer of heat from the ball bearings. After being heated up, the process cooling fluid 14 flows into the third heat exchanger 14 to transfer heat to the working fluid 26. So, in the process, the process cooling fluid 14 gets cooled by transferring the heat to the working fluid 26 and the working fluid 26 gets heated up. In another alternate embodiment, the third heat exchanger 22 can be any process cooler having the process cooling fluid 14 which can be any coolant fluid sufficient enough to cool any process element which is involved in the power generation process.

Before entering the first heat exchanger 18, the working fluid 26 is further heated by a second heat exchanger 20 connected to said first heat exchanger 18 through a first flow path 30 and said third heat exchanger 22 through a second flow path 32. The second heat exchanger 20 transfers heat to said working fluid 26 from a fluid 28 received downstream of said heat recovery steam generator unit 10, said second heat exchanger 20 being connected to the first heat exchanger 18 by a first flow path 30 of the working fluid 26. In alternate embodiments, the second heat exchanger 20 can also receive the fluid 28 received downstream of said heat recovery steam generator unit 10, like an outlet 40 of the heat recovery steam generation unit 10, or an exhaust 42 of a steam turbine 44 that is fed by said outlet 40 of said heat recovery steam generation unit 10, or a forwarding hot water line 46 fed by the steam turbine 44.

The first flow path 30, the second flow path 32 and the third flow path 34 of said working fluid 26 together makes a first circulation path 38 of said working fluid 26 through which said working fluid 26 circulates through first heat exchanger 18, second heat exchanger 20 and third heat exchanger 22 to provide heat to said ambient air 8 entering through said inlet 6 of said gas turbine system 4.

When cooling of the ambient air 8 is required, the first heat exchanger 18 also receives the working fluid 26 from a fourth heat exchanger 24 which is connected to said first heat exchanger 18 through a fourth flow path 36 and connected to said third flow path 34 to define a second circulation path 56 which is in parallel relationship to said first circulation path 38. The fourth heat exchanger 24 cools said working fluid 26 by transferring heat from said working fluid 26 to an exchanger cooling fluid 46 received from of an absorption chiller 48. The absorption chiller 48 is fed with a steam output 50 from said exhaust 42 of the steam turbine 44. Alternatively, the fourth heat exchanger 24 can also receive the exchanger cooling fluid 46 from a forwarding district cooling line 52 that is supplied with a cool fluid 54 cooled by said absorption chiller 48 or any other unit of the power generation system 2 which generates exchanger cooling fluid 46 such that to cool said working fluid 26 by receiving heat from said working fluid 26.

The first heat exchanger 18 receives a fluid mixture 62 of the working fluid 26 heated by said second heat exchanger 20 and third heat exchanger 22 and the working fluid 26 cooled by the fourth heat exchanger 24. The temperature of said fluid mixture 62 is controlled by controlling the proportion of the heated and cooled working fluid 26 in the fluid mixture 62. The flow of the working fluid 26 received from said second heat exchanger 20 and said third heat exchanger 22 is controlled by a first control valve 58. The flow of said working fluid 26 received from said fourth heat exchanger 24 is controlled by a second control valve 60. The first control valve 58 and the second control valve 60 are operated at the same time, so that a proportion of the working fluid 26 is received from the first flow path 30 and another portion of working fluid 26 is received from the fourth heat exchanger 24. The control in flow of the working fluid 26 provides the fluid mixture 62 at the first heat exchanger 18 in such a way to control temperature of the fluid mixture 62. This in turn helps to cool or heat the ambient air 8 up to the desired temperature.

The first control valve 58 is a three- way valve to further control flow of the working fluid 26 passing out of the first heat exchanger 18 and re-circulated into the first heat exchanger 18. The first control valve 58 can also be a two-way valve sufficient enough to control the flow of the working fluid 26 from the second heat exchanger 20 to the first heat exchanger 18 and a separate valve can be provided for controlling the flow of the working fluid 26 out of first heat exchanger 18 and re-circulating back into the first heat exchanger 18. In a further embodiment, the fluid is not re-circulated back to the first heat exchanger 16, so the first control valve 58 in such case is only two-way control valve.

The working fluid 26 flows in a closed loop, i.e., the working fluid 26 after being passed out of the first heat exchanger 16, it flows through any of the first circulation path 38, or the second circulation path 56, or in combination to each other.

The working fluid 26 after being passed out of the first heat exchanger 18 is cooled further, so that to reach to an optimum temperature before entering the third heat exchanger 22. A fluid cooler 64 is placed in such a way, that the working fluid 26 after passing out from the first heat exchanger 18 enters into the fluid cooler 64 to regulate temperature of the working fluid 26 before being flown to the third heat exchanger 22. The working fluid 26 is cooled further to receive a proper proportion of heat from the process cooling fluid 14, so that temperature of the process cooling fluid 14 should be controlled to cool the process element 16.

A third control valve 66 is provided in a parallel flow relationship to the fluid cooler 64 in respect to the working fluid 26. The third control valve 66 controls flow of said working fluid 26 from said first heat exchanger 18 to the third heat exchanger 22, and to said fourth heat exchanger 24. If the working fluid 26 is required to be cooled less, than the third control valve 66 is turned in a way to flow more of the working fluid 26 through the third valve 66 in respect to a proportion of the working fluid flowing into the fluid cooler 64. On the other hand, if the working fluid 26 is required to be cooled more, than the third control valve 66 is turned in an another way to flow more of the working fluid 26 through the fluid cooler 64 in respect to the proportion of the working fluid 26 flowing into the third control valve 66.

## Claims

1. A power generation system (2) comprising:
- a gas turbine system (4) having an inlet (6) for ambient air (8),
- a heat recovery steam generation unit (10) for recovering heat from an exhaust (12) of said gas turbine system (4) to generate steam,
- means for circulating a process cooling fluid (14) for cooling a process element (16) of said power generation system (2),
- a first heat exchanger (18) adapted to transfer heat from a working fluid (26) to said ambient air (8) entering said gas turbine inlet (6),
- a second heat exchanger (20) adapted for transferring heat to the working fluid (26) from a fluid (28) received downstream of said heat recovery steam generator unit (10), said second heat exchanger (20) being connected to the first heat exchanger (18) by a first flow path (30) of the working fluid (26), and
- a third exchanger (22) adapted for transferring heat to the working fluid (26) from said process cooling fluid (14), said third heat exchanger (22) being connected to said second heat exchanger (20) by a second flow path (32) of the working fluid (26) and further connected to the first heat exchanger (18) by a third flow path (34) of the working fluid (26), wherein said first (30), second (32) and third (34) flow paths define a first circulation path (38) of the working fluid (26).

2. A power generation system (2) according to claim 1, wherein the fluid (28) received downstream of said heat recovery steam generator unit (10), is adapted to be received from an outlet (40) of the heat recovery steam generation unit (10), or an exhaust (42) of a steam turbine (44) that is fed by said outlet (40) of said heat recovery steam generation unit (10), or a forwarding hot water line (46) fed by the steam turbine (44).

3. A power generation system (2) according to any of the claims 1 or 2, wherein the process cooling fluid (14) is lubrication oil and the third heat exchanger (22) is a lubrication oil cooler.

4. A power generation system (2) according any of the claims from 1 to 3, comprising a fourth heat exchanger (24) adapted to cool said working fluid (26) by transferring heat from said working fluid (26) to an exchanger cooling fluid (68) received from one of an absorption chiller (48) that is fed with a steam output (50) from said exhaust (42) of the steam turbine (44), or a forwarding district cooling line (52) that is supplied with a cool fluid (54) cooled by said absorption chiller (48),
- wherein said fourth heat exchanger (24) adapted to connect to said first heat exchanger (18) through a fourth flow path (36) and to connect to said third flow path (34) to define a second circulation path (56) in parallel to said first circulation path (38).

5. A power generation system (2) according to the claim 4, comprising:
- a first control valve (58) to control flow of the working fluid (26) heated by said second heat exchanger (20) and said third heat exchange (22),
- a second control valve (60) to control flow of the working fluid (26) cooled by the fourth heat exchanger (24).

6. A power generation system (2) according to claim 5, wherein the first heat exchanger (18) adapted to transfer heat to the ambient air (8) from a fluid mixture (62) comprising the working fluid (26) heated by said second heat exchanger (20) and third heat exchanger (22) and the working fluid (10) cooled by the fourth heat exchanger (24), wherein the first and second control valves (58, 60) are operable to control a temperature of said fluid mixture (62).

7. A power generation system (2) according to any of the claims 1 to 6, wherein said working fluid (26) is adapted to flow through at least one of said first circulation path (38) or said second circulation path (56) in a closed loop.

8. A power generation system (2) according to claim 7, comprising a fluid cooler (64) adapted to regulate temperature of the working fluid (26) passed out from the first heat exchanger (18) and to be flown to the second heat exchanger (20).

9. A power generation system (2) according to the claim 8, comprising:
- a third control valve (66) adapted to control flow of said working fluid (26) from said first heat exchanger (18) to said second heat exchanger (20), and to said fourth heat exchanger (24),
wherein the fluid cooler (64) is in parallel flow relationship to said third control valve (66) in respect to said working fluid (26).

10. A power generation system (2) according to claim 7 or 8, wherein the first control valve (58) is a three-way valve adapted to further control flow of the working fluid (26) passing out of the first heat exchanger (18) and re-circulated into the first heat exchanger (18)

11. A method for generating power from a power generation system (2) comprises:
- installing a gas turbine system (4) having an inlet (6) for ambient air (8),
- installing a heat recovery steam generation unit (10) for recovering heat from an exhaust (12) of said gas turbine system (4) to generate steam,
- installing means for circulating a process cooling fluid (14) for cooling a process element (16) of said power generation system (2),
- installing a first heat exchanger (18) adapted to transfer heat from a working fluid (26) to said ambient air (8) entering said gas turbine inlet (6),
- installing a second heat exchanger (20) adapted for transferring heat to the working fluid (26) from a fluid (28) received downstream of said heat recovery steam generator unit (10), said second heat exchanger (20) being connected to the first heat exchanger (18) by a first flow path (30) of the working fluid (26), and
- installing a third exchanger (22) adapted for transferring heat to the working fluid (26) from said process cooling fluid (14), said third heat exchanger (22) being connected to said second heat exchanger (20) by a second flow path (32) of the working fluid (26) and further connected to the first heat exchanger (18) by a third flow path (34) of the working fluid (26), wherein said first (30), second (32) and third (34) flow paths define a first circulation path (38) of the working fluid (26).

12. A method for generating power according to claim 11 comprises:
- installing a fourth heat exchanger (34) adapted to cool said working fluid (26) by transferring heat from said working fluid (26) to an exchanger cooling fluid (68) received from one of an absorption chiller (48) that is fed with a steam output (50) from said exhaust (42) of the steam turbine (44), or a forwarding district cooling line (52) that is supplied with a cool fluid (54) cooled by said absorption chiller (48),
- wherein said fourth heat exchanger (24) adapted to connect to said first heat exchanger (18) through a fourth flow path (36) and to connect to said third flow path (34) to define a second circulation path (56) in parallel to said first circulation path (38).

13. A method for generating power according to claims 11 or 12, comprises:
- installing a first control valve (58) to control flow of the working fluid (26) heated by said second heat exchanger (20) and said third heat exchange (22),
- installing a second control valve (60) to control flow of the working fluid (26) cooled by the fourth heat exchanger (24).

14. A method for generating power according to any of the claims 11 to 13, comprises:
- flowing the working fluid (26) through at least one of said first circulation path (38) or said second circulation path (56) in a closed loop.

15. A method for generating power according to claim 14, comprises:
- providing a fluid cooler (64) adapted to regulate temperature of the working fluid (26) passed out from the first heat exchanger (18) and to be flown to the second heat exchanger (20).

16. A method for generating power according to claim 15, comprises:
- installing a third control valve (66) adapted to control flow of said working fluid (26) from said first heat exchanger (18) to said second heat exchanger (20), and to said fourth heat exchanger (24),
wherein the fluid cooler (64) is in parallel flow relationship to said third control valve (66) in respect to said working fluid (26).
